# NEUE EUROPÄISCHE PATENTSCHRIFT

(11) **EP 2 324 965 B2**
(45) Veröffentlichungstag und Bekanntmachung des Hinweises auf die Entscheidung über den Einspruch: **17.04.2019**
(45) Hinweis auf die Patenterteilung: 23.01.2013
(21) Anmeldenummer: 10014346.0
(22) Anmeldetag: 05.11.2010
(51) Int. Cl.: B25J 9/16, G05B 19/045

(54) **Verfahren und Vorrichtung zum Steuern von Manipulatoren**
Method and device for controlling manipulators
Procédé et dispositif destinés à la commande de manipulateurs

(30) Priorität: 23.11.2009 DE 102009054230
(43) Veröffentlichungstag der Anmeldung: 25.05.2011
(73) Patentinhaber: KUKA Deutschland GmbH, 86165 Augsburg (DE)
(72) Erfinder: Finkemeyer, Bernd, 86150 Augsburg (DE)
(74) Vertreter: Schlotter, Alexander Carolus Paul

(56) Entgegenhaltungen:
- EP-A2- 1 398 680
- EP-A2- 1 731 273
- DE-A1- 10 040 467
- DE-A1- 10 360 200
- DE-A1-102006 021 300
- US-A1- 2006 033 462

## Beschreibung

Die vorliegende Erfindung betrifft ein Verfahren und eine Vorrichtung zum Steuern wenigstens eines Manipulators, insbesondere Roboters, wobei Kommandos in einer Zustandsmaschine einen aktiver Zustand durchlaufen.

Steuerungen für Manipulatoren, insbesondere für Roboter wie beispielsweise Industrieroboter, können als Zustandsmaschinen bzw. -automaten ("state machines") ausgebildet bzw. implementiert sein. Dabei wird das Verhalten der Steuerung, insbesondere durch sie gesteuerte Aktionen des bzw. der Manipulatoren, durch Zustände der Zustandsmaschine, Übergänge bzw. Transitionen zwischen diesen Zuständen und Aktionen in diesen Zuständen bestimmt. Beispielsweise ermöglicht die kommerzielle Software "Stateflow" die Erstellung und Simulation von Steuerungszustandsmaschinen im de-facto-Industriestandard MatLab-Simulink.

Klassische Steuerungszustandsmaschinen durchlaufen in determinierter Abfolge einzelne Zustände, in denen jeweils Kommandos ausgeführt werden. Dabei wird das Folgekommando erst angestoßen, wenn ein stationärer Genauhalt erreicht wurde, was beispielsweise ein Überschleifen zwischen positions- und kraftgeregelten Abschnitten erschwert.

Die bisherige Praxis birgt weitere Nachteile: so führt die Kommandoverknüpfung über stationäre Genauhalte zu Taktzeitverlusten. Auf der anderen Seite benötigen Filter, Beobachter und dergleichen regelmäßig einen gewissen Vorlauf, um sich einzuschwingen, i.e. brauchbare Ausgabewerte zu generieren. Darüber hinaus ist die Anbindung externer Prozesse oder die Modifikation der Steuerung aufgrund der, der starren Implementierung zugrundeliegenden, Determiniertheit schwierig.

Aus der EP 1 398 680 B1 ist eine endliche Zustandsmaschine bekannt, die in determinierter Folge mehrere Zustände durchläuft, um in einer Robotersteuerung glatte Sollbahnen vorzugeben.

Die DE 10 2006 021 300 A1 offenbart ein Verfahren zum Betreiben eines Steuergerätes. Das Steuergerät kann mehrere Zustände annehmen, wobei bei Übergang von einem ersten Zustand in einen zweiten Zustand ein Übergangszustand zwischengeschaltet wird.

Aufgabe der vorliegenden Erfindung ist es, die Steuerung von Manipulatoren zu verbessern und insbesondere einen oder mehrere der oben erläuterten Nachteile wenigstens teilweise zu beseitigen.

Diese Aufgabe wird durch ein Verfahren mit den Merkmalen des Anspruchs 1 gelöst. Anspruch 9 stellt eine Vorrichtung, Anspruch 10 bzw. 11 ein Computerprogramm bzw. ein Computerprogrammprodukt, insbesondere einen Datenträger bzw. ein Speichermedium, zur Durchführung eines Verfahrens nach Anspruch 1 unter Schutz. Die Unteransprüche betreffen vorteilhafte Weiterbildungen.

Erfindungsgemäß werden ein oder mehrere Manipulatoren, insbesondere (Industrie)Roboter, gesteuert, indem mehrere Kommandos jeweils in einer Zustandsmaschine einen aktiven Zustand durchlaufen. Zur kompakteren Darstellung wird vorliegend auch eine Regelung, i.e. die Bestimmung von Stellgrößen unter direkter und/oder indirekter Rückführung von erfassten Ist-Größen, verallgemeinernd als Steuerung bezeichnet.

Ein Kommando kann dabei allgemein insbesondere eine oder mehrere Bewegungs-und/oder Aktionsanweisungen für einen oder mehrere Manipulatoren umfassen. Beispielsweise kann ein Kommando das Anfahren oder Halten einer Soll-Pose, das Abfahren einer Soll-Bahn, das Aufprägen einer Soll-Kraft und/oder eine Werkzeugaktion wie das Öffnen oder Schließen eines Greifers umfassen. Zur kompakteren Darstellung wird vorliegend auch ein antiparalleles Kräftepaar, i.e. ein Drehmoment, verallgemeinernd als Kraft bezeichnet. Ein Kommando kann auch eine oder mehrere Anweisungen für ein oder mehrere Prozessgeräte umfassen, etwa für eine Klebepistole oder Schweißzange, insbesondere wenn deren Steuerung in eine Manipulatorsteuerung integriert ist.

Gemäß der vorliegenden Erfindung durchlaufen mehrere Kommandos einen ihrem aktiven Zustand vorgelagerten Vorlauf- und ihrem aktiven Zustand nachgelagerten Nachlaufzustand.

Ein Vorlauf- bzw. Einschwingzustand eines Kommandos, in dem zur Ausführung des Kommandos erforderlich Steuerungskomponenten über entsprechende Schnittstellen Daten von Sensoren empfangen, ermöglicht es vorteilhafterweise, dass Filter, Beobachter, Parameteridentifikationen und dergleichen durch die Daten mit der aktuellen, realen Situation vorab wenigstens teilweise synchronisiert werden, so dass die entsprechende Funktionaliät zur Verfügung steht, wenn das Kommando in den aktiven Zustand übergeht, i.e. ausgeführt wird, wobei im aktiven Zustand Befehle an Aktuatoren, beispielsweise Manipulatorantriebe, Regler oder dergleichen ausgeben werden, während im Vorlaufzustand keine Befehle an Aktuatoren ausgeben werden.

Somit können Steuerungskomponenten bzw. -funktionalitäten, die in seinem aktiven Zustand durch das Kommando kontrolliert werden, in dessen Vorlaufzustand bereits parallel zu anderen, aktiven Kommandos einschwingen bzw. synchronisiert werden.

Eine Steuerungskomponente kann dabei Hard- und/oder Softwarekomponenten, beispielsweise Recheneinrichtungen, Mikrocontroller, Speicher, Datenverbindungen, Ein-/Ausgabeeinrichtungen, Sensoren, Aktoren, insbesondere Antriebe, Programme, Programmmodule und dergleichen umfassen, um eine oder mehrere Steuerungsfunktionalitäten, beispielsweise die Erfassung und Umwandlung von Sensorwerten, Bestimmung von Parametern, Ermittlung und Ausgabe von Stell- bzw. Steuergrößen und dergleichen zu implementieren.

Ein Nachlauf- bzw. Pflegezustand eines Kommandos, in dem der bzw. die Manipulatoren nach Abarbeitung des Kommandos im aktiven Zustand vorzugsweise in vorgegebener Weise gesteuert werden, insbesondere ein Zustand des bzw. der Manipulatoren nach Abarbeiten des Kommandos gehalten wird, ermöglicht vorteilhafterweise eine geordnete Übergabe an ein anderes, aktives Kommando, da so auch nach Abarbeitung des Kommandos stets ein wohldefinierter Zustand aufrechterhalten wird.

Somit kann ein Nachlaufzustand dem ihm vorhergehenden aktiven Zustand entsprechen, insbesondere können auch im Nachlaufzustand Befehle an Aktuatoren ausgeben werden. In einer bevorzugten Ausführung kann das Kommando dabei zwischen aktivem und Nachlaufzustand modifiziert, insbesondere umparametrisiert werden. So kann beispielsweise ein Kommando, welches eine Soll-Pose eines Manipulators umfasst, diese Soll-Pose in einem aktiven Zustand mit einer steifen, i.e. genauen Positionsregelung anfahren, und anschließend, zum Beispiel durch Reduzierung eines Integral-Anteils bzw. Verringerung von Regelkoeffizienten eines PID-Reglers, i.e. Umparametrisierung der Steuerungsfunktionalität, halten, bis ein anderes Kommando die Steuerung übernimmt.

Gemäß der vorliegenden Erfindung werden mehrere Kommandos zugleich, vorzugsweise im wesentlichen parallel und/oder unabhängig voneinander, bearbeitet. Insbesondere können ein oder mehrere Kommandos sich bereits in einem Vorlaufzustand befinden, um Filter, Beobachter, Parameteridentifikationen und dergleichen zu synchronisieren, während ein anderes Kommando noch aktiv ist. Dieses kann dann nach Abarbeitung in einen Nachlaufzustand übergehen und dort den bzw. die Manipulatoren in einem geordneten Zustand halten, bis ein anderes Kommando die Steuerung übernimmt. Gleichwohl können beide Aspekte auch unabhängig voneinander realisiert werden. So kann beispielsweise der Übergang eines Zustandsautomaten in einen Nachlaufzustand sicherstellen, dass stets ein wohldefinierter Zustand vorliegt, auch wenn beispielsweise zwischen zwei sensorbasierten Kommandos ein Programmstop oder Nothalt ausgelöst wird. Erfindungsgemäss werden mehrere zugleich abgearbeitete Kommandos durch entsprechende Übergänge zwischen den aktiven Zuständen synchronisiert.

Ein Grundgedanke der vorliegenden Erfindung liegt somit darin, dass Steuerungskommandos jeweils eine Kommandozustandsmaschine durchlaufen, wobei einem aktiven Zustand, in dem ein Kommando ausgeführt wird, ein Vor- bzw. Nachlaufzustand vor- bzw. nachgeschaltet ist, und mehrere Steuerungskommandos zugleich unterschiedliche Zustände durchlaufen können.

Gemäß einer bevorzugten Ausführung durchläuft ein Kommando in einer Zustandsmaschine einen seinem Vorlaufzustand nochmals vorgelagerten Vorverarbeitungszustand. Im Gegensatz zum Vorlaufzustand findet hier vorzugsweise noch keine Einbindung in den Datenfluss statt, um Steuerungsfunktionalitäten wie Filter, Beobacher, Parameteridentifikationen und dergleichen zu aktualisieren. Vielmehr können in einem Vorverarbeitungszustand beispielsweise Ressourcen zur Abarbeitung des Kommandos bereitgestellt und Schnittstellen vorgegeben, insbesondere Interfaces ausgehandelt bzw. abgestimmt werden. Vorzugsweise werden in einem Vorverarbeitungszustand Steuerungsfunktionaliäten und/oder - komponenten, beispielsweise Interpolatoren, Kraftregelungen, Tracker und dergleichen, über das Kommando informiert und gegebenenfalls entsprechend parametriert. Beispielsweise kann in einem Vorverarbeitungszustand eines Kommandos zum positionsgeregelten Abfahren einer Sollbahn ein Interpolator informiert und ein Positionsregler eingestellt werden. Vorteilhafterweise kann ein solcher Vorverarbeitungszustand zeitunkritisch sein und somit vorzugsweise außerhalb eines Steuerungstaktes durchlaufen werden.

Erfindungsgemäss durchläuft ein Kommando in einer Zustandsmaschine einen seinem Nachlaufzustand nochmals nachgelagerten Erledigtzustand.

Ein Kommando übernimmt die Kontrolle über Steuerungskomponenten, sobald es in einen aktiven Zustand wechselt. Sobald alle von einem ersten Kommando in einem aktiven bzw. Nachlaufzustand kontrollierten Steuerungskomponenten bzw. - funktionalitäten von anderen Kommandos übernommen worden sind, beispielsweise Antriebsregler nun von einem anderen Kommando angesteuert werden, geht das erste Kommando in den Erledigtzustand über. In diesem kann das erste Kommando innerhalb der Steuerung gelöscht oder zur erneuten Verwendung in einen Warte-, Vorverarbeitungs- oder Vorlaufzustand übergehen.

Zusätzlich oder alternativ zu den vorstehend erläuterten Zuständen Vorverarbeitungs-, Vorlauf-, aktiver, Nachlauf- und Erledigtzustand können in einer Zustandsmaschine für ein Kommando ein oder mehrere weitere Zustände vorgesehen sein.

Beispielsweise kann das Kommando durch einen Nothalt oder eine andere durch eine Sicherheitseinrichtung ausgelöste Aktion in einen Sicherheitszustand übergehen. In diesem kann beispielsweise ein bahntreues Anhalten oder das Verhalten einer Kraftregelung nach einem Nothalt kontrolliert werden. Im Gegensatz zu herkömmlichen Steuerungszustandsmaschinen ermöglichen solche kommandospezifischen Sicherheitszustände vorteilhaft spezifische Reaktionen. So kann beispielsweise die Steuerung unterschiedliche Aktionen durchführen, wenn in einem aktiven Zustand eines Kommandos, das positionsgesteuert eine geplante Bahn abfährt, ein Nothalt erfolgt, oder dieser in einem aktiven Zustand eines Kommandos erfolgt, das sensorgeführt eine Kraftregelung ausführt.

Zusätzlich oder alternativ können auch, wiederum vorzugsweise kommandospezifische, Fehler- und/oder Wartezustände vorgesehen sein.

Wie vorstehend ausgeführt, kann ein Kommando in einem Zustand auf wenigstens eine Steuerungskomponente, insbesondere eine Sensor- und/oder Aktorfunktionalität, zugreifen, beispielsweise in einem Vorlaufzustand bereits auf Sensorfunktionalitäten, um Filter, Beobachter und dergleichen einschwingen zu lassen, in einem aktiven Zustand zusätzlich auf Aktorfunktionalitäten, um den bzw. die Manipulatoren zu steuern. Dabei ergibt sich vorteilhaft auch die Möglichkeit, mehrere von einem Kommando kontrollierte Steuerungskomponenten bzw. -funktionalitäten synchron, i.e. bei Übergang in den aktiven Zustand zu starten.

Einem Kommando können wie erläutert kommando- und/oder zustandsspezifische Steuerungsfunktionaliäten zugeordnet sein. Beispielsweise kann ein Interpolator oder Regler je nachdem, von welchem Kommando er kontrolliert wird, unterschiedliche Funktionalitäten verwirklichen und zum Beispiel für ein Kommando zum positionsgeregelten Bahnfahren andere Ausgabewerte erzeugen als für ein Kommando zur Kraftregelung.

Vorzugsweise signalisiert eine Steuerungskomponente bzw. -funktionalitäten einem Kommando Bereitschaft, von ihm übernommen, aktiviert und/oder beendet zu werden. Beispielsweise kann eine Komponente im Vorlaufzustand Bereitschaft signalisieren, dass sie einen stationären bzw. eingeschwungenen Zustand erreicht hat und somit bereit für den aktiven Zustand ist. Gleichermaßen kann die Komponente im Pflegezustand Bereitschaft signalisieren, von einem anderen Kommando übernommen zu werden.

Vorteilhafterweise können mittels einer erfindungsgemäßen Steuerung harte Echtzeitanforderungen einer Ablaufsteuerung von einer Bewegungssteuerung entkoppelt werden. Insbesondere kann die Zeit zwischen zwei Kommandos beliebig sein. Zudem ermöglicht es die erfindungsgemäße Steuerung vorteilhafterweise, offline vorab und somit zeitunkritisch, geplante Kommandos noch kurz vor ihrer tatsächlichen Ausführung an aktuelle Bedingungen anzupassen. Vorteilhafterweise ermöglicht eine erfindungsgemäße Steuerung insbesondere auch ein Überschleifen zwischen vorab geplanten und sensorgeführten Bahnen.

Insbesondere, wenn zugleich mehrere Kommandos bearbeitet werden, kann in einer bevorzugten Ausführung eine Reihenfolge vorgegeben werden, in der diese einen aktiven Zustand durchlaufen.

Diese kann beispielsweise dynamisch durch den Zeitpunkt bestimmt werden, zu dem die Kommandos jeweils einen bestimmten Zustand, insbesondere einen Vorlauf- oder Einschwingzustand, abgeschlossen haben. Vorteilhaft kann bei einer solchen FIFO-Reihenfolge ("First-In First-Out") eine Leerlaufzeit von Ressourcen reduziert werden, da stets ein Kommando einen aktiven Zustand durchläuft und dabei Ressourcen nutzt, sobald wenigstens ein Kommando hierzu bereit ist. Werden gleichzeitig mehrere Kommandos bereit, in den aktiven Zustand überzugehen, kann die Reihenfolge unter diesen durch ein vorgegebenes Auswahlkriterium, etwa die vorrangige Abarbeitung von ressourcenschonenden, mehr Ressourcen nutzenden oder höher priorisierten Kommandos vorgegeben werden.

Gleichermaßen kann die Reihenfolge dynamisch beispielsweise bei der Erstellung der Kommandos vorgegeben werden. Hierzu können Kommandos zum Beispiel Abhängigkeiten oder Relationen zu anderen Kommandos und/oder Bedingungen zugewiesen werden, so dass ein abhängiges Kommando erst dann einen aktiven Zustand durchläuft, wenn ein Kommando, von dem es gemäß einer vorgegebenen Relation abhängt, einen bestimmten Zustand, insbesondere einen aktiven oder Pflegezustand, durchlaufen hat, oder wenn eine bestimmte Bedingung, etwa das Vorhandensein eines Sensorsignals oder dergleichen, erfüllt ist.

Die Reihenfolge kann auch statisch bzw. teildynamisch vorgegeben werden, indem zum Beispiel den Kommandos bei der Programmierung Ordnungsnummern zugewiesen werden, in deren Reihenfolge sie den aktiven Zustand durchlaufen, unabhängig davon, ob ein anderes Kommando mit einer höheren Ordnungszahl bereits früher hierzu bereit wäre. Dies kann insofern teildynamisch geschehen, indem die vorgegeben Reihenfolge veränderbar ist, etwa, um neu hinzugefügte oder entfernte Kommandos zu berücksichtigen. Dies hat den Vorteil einer deterministischen Ausführungsreihenfolge, die unabhängig vom zeitlichen Durchlauf der Einzelzustände der verschiedenen Kommandos eingehalten wird.

Zusätzlich oder alternativ kann auch die Reihenfolge, in der eine oder mehrere Ressourcen miteinander konkurrierenden Kommandos zur Verfügung stehen, vorgegeben werden. So kann beispielsweise festgelegt werden, dass vorrangig stets ein aktives Kommando oder ein Kommando mit niedrigerer Ordnungszahl Zugriff auf die Ressource hat, und Kommandos mit höheren Ordnungszahlen oder in anderen Zuständen, beispielsweise einem Einschwingzustand, nur dann auf die Ressource zugreifen können, wenn diese gerade nicht von einem vorrangigen Kommando genutzt wird. Gleichermaßen ist auch hier beispielsweise eine FIFO-Abarbeitung möglich. Auf diese Weise können die Ressourcen, die einen Zugriff mehrerer konkurrierender Kommandos in der vorgegebenen Reihenfolge ermöglichen, optimal ausgenutzt werden, da nicht abgewartet werden muss, bis ein Kommando, das eine Ressource nutzt, komplett abgearbeitet ist. Insbesondere können parallele Programmtasks Kommandos, die dieselbe(n) Ressource(n) nutzen wollen, an eine Steuerung senden.

Weitere Vorteile und Merkmale ergeben sich aus den Unteransprüchen und den Ausführungsbeispielen. Hierzu zeigt, teilweise schematisiert, die einzige:

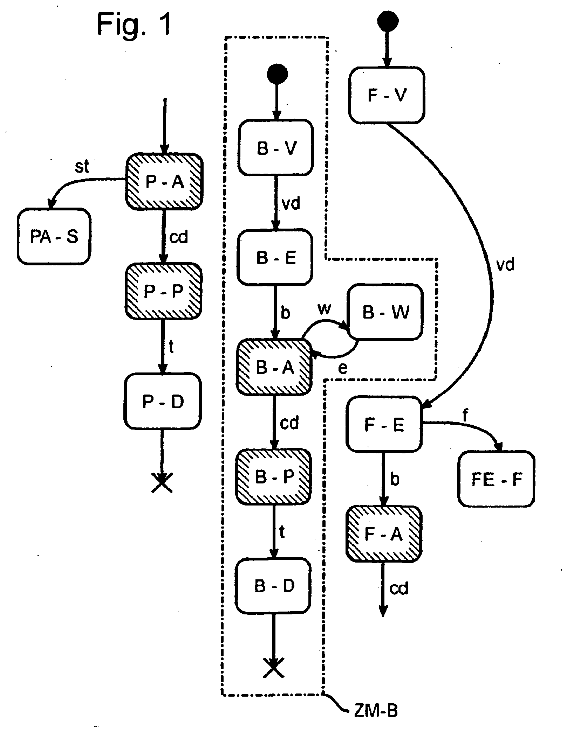

Fig. 1: ausschnittsweise eine Steuerung nach einer Ausführung der vorliegenden Erfindung.

Fig. 1 zeigt Zustände "-V" (Vorverarbeitungszustand), "-E" (Einschwingzustand), "-A" (aktiver Zustand), "-P" (Pflegezustand) bzw. "-D" (Erledigtzustand "Done") von Kommandos "P", "B" bzw. "D". Dabei symbolisiert "P" ein Kommando zum positionsgeregelten Anfahren einer Soll-Pose eines Industrieroboters (nicht dargestellt), "F" ein Kommando zur Kraftregelung, in der der Roboter mit seinem Werkzeug eine vorgegebene Kraft aufbringt, und "B" ein Kommando zum Halten einer aktuellen Pose unter Kompensation von Gewichts-, Reibungs- und anderen Kräften mittels einer modellbasierten Regelung, deren Modell durch einen Beobachter adaptiert wird.

Jedes Kommando durchläuft eine Zustandsmaschine. In Fig. 1 ist hierzu exemplarisch die Zustandsmaschine ZM-B strichpunktiert angedeutet, die das Kommando B zum Halten einer aktuellen Pose mittels einer modellbasierten Regelung mit Beobachter durchläuft.

Ausgehend von dem in fachüblicher Weise durch einen ausgefüllten Kreis symbolisierten Startzustand durchläuft das Kommando B zunächst einen Vorverarbeitungszustand B-V, in dem das Kommando vorverabeitet wird. In diesem Zustand werden Parameter ausgewertet und Ressourcen bereitgestellt. Beispielsweise werden die Steuerungsfunktionalitäten "Modell" und "Beobachter" über den anstehenden Auftrag informiert, ihre Parameter mit default-Werten belegt, und Interfaces zwischen ihnen ausgehandelt. Diese Vorverarbeitung ist zeitunkritisch und kann, wie Fig. 1 zeigt, in der vertikal von oben nach unten ein Zeitablauf gedacht werden kann, parallel oder überschneidend mit anderen Zuständen P-A, F-V erfolgen.

Ist die Vorverabeitung abgeschlossen (Fig. 1: "vd"), geht das Kommando B in einen Vorlauf- oder Einschwingzustand B-E über. In diesem werden alle beteiligten Komponenten bereits in den Kontroll- und Datenfluss eingebunden und können über ihr Interface zyklisch Daten empfangen und versenden. Beispielsweise empfängt der Beobachter Gelenk-Ist-Positionen von Antriebssensoren und Antriebsstellgrößen von der Steuerung, schätzt hieraus Modellparameter ab und sendet diese an das Modell. Auf diese Weise schwingen Beobachter und Modell auf den realen Roboter ein. In diesem Zustand darf das Kommando B noch keine Steuerbefehle an Aktuatoren des Roboters senden.

Parallel dazu hat der Roboter positionsgeregelt eine Soll-Pose angefahren. Hierzu hat ein entsprechendes Kommando P einen aktiven Zustand P-A durchlaufen, in der die Pose angefahren wird, und ist anschließend in einen nachfolgend mit Bezug auf das Kommando B näher erläuterten Pflegezustand P-P übergegangen (Fig. 1: "t"), in dem die Pose positionsgeregelt gehalten wird, wobei in diesem Pflegezustand die Parameter des Positionsreglers an den Pflegezustand angepasst wurden, um den Regler "weich" zu stellen. In diesem Pflegezustand P-P signalisieren die vom Kommando P kontrollierten Steuerungskomponenten, beispielsweise Antriebsregler, dass sie zur Übernahme durch ein neues Kommando bereit sind.

Sobald auch alle Komponenten des Kommandos B Bereitschaft signalisiert haben, den Einschwingzustand zu beenden, beispielsweise Modell und Beobachter einen quasistationären bzw. eingeschwungenen Zustand erreicht haben, geht das Kommando B in den aktiven Zustand B-A über (Fig. 1: "b"). Dieser unterscheidet sich von dem vorhergehenden Einschwingzustand B-E nur dadurch, dass nun auch schreibend auf Hardwareressourcen zugegriffen, i.e. beispielsweise Steuerbefehle an Antriebe bzw. Antriebsregler gesendet werden dürfen.

Ist das Kommando B abgearbeitet (Fig. 1: "cd"), geht es in einen Pflegezustand B-P über. In diesem wird der erreichte Zustand des Roboters, beispielsweise seine Pose, gehalten. Wie vorstehend mit Bezug auf den Pflegezustand P-P des Positionsregelkommandos P erläutert, unterscheidet sich dieser bezüglich des Kontroll- und Datenflusses nicht von dem aktiven Zustand, jedoch kann die Parametrisierung an die Bedürfnisse des zu pflegenden Zustands angepasst sein, beispielsweise eine Vorsteuerverstärkung der modellbasierten Regelung reduziert werden.

Im Pflegezustand melden die beteiligten Steuerungskomponenten, beispielsweise die Antriebsregler, ihre Bereitschaft, nun von anderen Kommandos übernommen zu werden. Sobald das Kommando F zur Kraftregelung des Roboters, das, wie in Fig. 1 dargestellt, analog zum vorstehend erläuterten Kommando B einen Zustandsautomaten durchläuft, seinen Einschwingzustand F-E beendet hat, in den aktiven Zustand F-A übergegangen ist und dabei die Kontrolle über die verwendeten Hardwareressourcen, insbesondere die Antriebe des Roboters übernommen hat, ist die Ausführung des Kommandos B beenden, es geht in einen Erledigtzustand B-E über (Fig. 1: "t"), in dem es beispielsweise innerhalb der Steuerung gelöscht wird.

In Fig. 1 sind schraffiert die Zustände gekennzeichnet, die die Robotersteuerung nacheinander (in Fig. 1 von oben nach unten) durchläuft. Man erkennt ein problemloses Überschleifen zwischen dem Anfahren der vorgeplanten Pose durch das Kommando P-A und der sensorgeführten Kraftregelung durch das Kommando F-A. Zudem ist ersichtlich, dass die Kommandos P, B und F ihre Zustandsmaschine zugleich, teilweise parallel und unabhängig voneinander, durchlaufen. Man erkennt, dass in einfacher Weise weitere Kommandos implementiert werden können, indem eine entsprechende Zustandsmaschine implementiert wird. Insofern durchläuft erfindungsgemäß jedes Kommando eine eigene Zustandsmaschine (z.B. ZM-B), während gleichermaßen die Steuerung insgesamt eine (in Fig. 1 schraffiert angedeutete) Zustandsmaschine durchläuft.

Dabei ist die Reihenfolge vorgegeben, in der die Kommandos P, B und F den aktiven Zustand durchlaufen, indem diesen beispielsweise aufsteigende Ordnungszahlen oder Abhängigkeiten zu anderen Kommandos zugewiesen sind. Beispielsweise hat der Anwender im Ausführungsbeispiel durch die Vergabe der Ordnungsziffer "1" an das Kommando P und der Ordnungsziffer "2" an das Kommando B zum Halten einer aktuellen Pose mittels einer modellbasierten Regelung festgelegt, dass zunächst das Kommando P und erst anschließend das Kommando B den aktiven Zustand durchlaufen. Weiter hat er durch Vorgabe einer Abhängigkeit von B für das Kommando F vorgegeben, dass das Kommando F zur Kraftregelung erst dann seinen aktiven Zustand durchlaufen darf, wenn das Kommando B diese bereits durchlaufen hat und in seinen Pflegezustand B-P übergegangen ist. Man erkennt anhand der schraffiert angedeuteten zeitlichen Abfolge, dass diese somit vorgegebene Reihenfolge P → B →F auch dann erhalten bleibt, wenn das Kommando F seine Einschwingphase früher beendet hätte als das Kommando B.

Man erkennt auch, dass hier Ressourcen optimal genutzt werden können, indem konkurrierende Kommandos zugleich ausgeführt werden. Wenn beispielsweise sowohl das Kommando P als auch das Kommando B jeweils auf Positionssensoren zugreifen wollen, können diese entsprechend der-zum Beispiel durch die Ordnungszahlen - vorgegebenen Reihenfolge den Kommandos alternierend zur Verfügung stehen. Gleichermaßen ist es auch möglich, dass die Reihenfolge, in der Ressourcen verschiedenen konkurrierenden Kommandos zur Verfügung stehen, zum Beispiel durch deren Zustand bestimmt werden, etwa stets zunächst einem aktiven Kommando und nur dann, wenn dieses die Ressource nicht benötigt, einem Kommando im Einschwingzustand.

Rein exemplarisch sind in Fig. 1 weitere Kommandozustände skizziert, wobei zur besseren Übersichtlichkeit im Zustandsautomatenausschnitt der Fig. 1 nicht alle vorgesehenen Zustände bzw. Transitionen dargestellt sind.

Beispielsweise geht das aktive Kommando B bei einem Ereignis "w" in einen Wartezustand B-W über, aus dem es bei einem Ereignis "e" in den aktiven Zustand B-A zurückkehrt. Solche Ereignisse können beispielsweise Benutzereingaben, Sensorsignale, Programmablaufmarken oder dergleichen sein.

Für das positionsgeregelte Anfahren der Sollpose durch das aktive Kommando P ist ein für dieses Kommando spezifischer Nothaltzustand PA-S vorgesehen, in den die Steuerung bei einem Nothalt-Eingang "st" übergeht. Hier wird beispielsweise ein bahntreuer Stop ausgeführt. Erfolgt der Nothalt-Eingang "st" im Pflegezustand des Kommandos P oder dem aktiven oder Pflegezustand eines anderen Kommandos B, F, kann in andere Sicherheitszustände übergegangen, beispielsweise eine Soll-Kontaktkraft auf Null gestellt werden (nicht dargestellt).

Schließlich ist rein exemplarisch ein Fehlerzustand FE-F dargestellt, in den das Kommando F zur Kraftregelung übergeht, wenn in seinem Einschwingzustand F-E, in dem beispielsweise Filter für Kraftsensoren sich einschwingen, ein Fehler auftritt (Fig. 1: "f"). Hier können beispielsweise Kraftsensoren rekalibriert und/oder Filter reinitialisiert werden.

### Bezugszeichenliste

- B: Kommando "Halte Pose mittels modellbasierter Regelung mit Beobachter"
- F: Kommando "Aufprägen einer Sollkraft mittels Kraftregelung"
- P: Kommando "Fahre positionsgeregelt Soll-Pose an"
- -A: aktiver Zustand
- -D: Erledigtzustand
- -E: Einschwingzustand
- -P: Pflegezustand
- -V: Vorverarbeitungszustand
- -F: (kommandospezifischer) Fehlerzustand
- -S: (kommandospezifischer) Sicherheitszustand
- -W: (kommandospezifischer) Wartezustand

## Patentansprüche

1. Verfahren zum Steuern wenigstens eines Manipulators, insbesondere Roboters, bei dem mehrere Kommandos (P, B, F) abgearbeitet werden, **dadurch gekennzeichnet, dass**
eine Steuerung als Zustandsmaschine implementiert ist und durch die Steuerung gesteuerte Aktionen des Manipulators durch Zustände der Zustandsmaschine, Übergänge zwischen diesen Zuständen und Aktionen in diesen Zuständen bestimmt werden , wobei
das jeweilige Kommando in der Zustandsmaschine (ZM) einen aktiven Zustand (-A) durchläuft und die Kontrolle über Steuerungskomponenten übernimmt, sobald es in den aktiven Zustand wechselt, wobei
das jeweilige Kommando in der Zustandsmaschine einen seinem aktiven Zustand vorgelagerten Vorlaufzustand (-E) und einen seinem aktiven Zustand nachgelagerten Nachlaufzustand (-P) durchläuft, wobei
in dem Vorlaufzustand zur Ausführung des Kommandos erforderliche Steuerungskomponenten über entsprechende Schnittstellen Daten von Sensoren empfangen und von dem Kommando keine Befehle an Aktuatoren ausgegeben werden;
das Kommando in einen dem Nachlaufzustand nachgelagerten Erledigtzustand übergeht, sobald alle von dem Kommando in dem aktiven oder Nachlaufzustand kontrollierten Steuerungskomponenten von anderen Kommandos übernommen worden sind; und
zugleich mehrere Kommandos (P, B, F) bearbeitet und durch Übergänge zwischen den aktiven Zuständen synchronisiert werden.

2. Verfahren nach Anspruch 1, **dadurch gekennzeichnet, dass** wenigstens ein Kommando in einer Zustandsmaschine einen seinem Vorlaufzustand vorgelagerten Vorverarbeitungszustand (-V) und/oder einen seinem Nachlaufzustand nachgelagerten Erledigtzustand (-D) durchläuft.

3. Verfahren nach einem der vorhergehenden Ansprüche, **dadurch gekennzeichnet, dass** in einer Zustandsmaschine für ein Kommando wenigstens ein weiterer kommandospezifischer Zustand, insbesondere ein Sicherheitszustand (-STOP), Fehlerzustand (-F) und/oder Wartezustand (-W) vorgesehen ist.

4. Verfahren nach einem der vorhergehenden Ansprüche, **dadurch gekennzeichnet, dass** ein Kommando in einem Zustand (E, A, P) mit wenigstens einer Steuerungskomponente, insbesondere einer Sensor- und/oder Aktorfunktionalität, kommuniziert.

5. Verfahren nach einem der vorhergehenden Ansprüche, **dadurch gekennzeichnet, dass** einem Kommando eine kommando- und/oder zustandsspezifische Steuerungsfunktionalität zugeordnet ist.

6. Verfahren nach einem der vorhergehenden Ansprüche, **dadurch gekennzeichnet; dass** in einem Zustand Parameter ausgewertet, Ressourcen bereitgestellt, Schnittstellen vorgegeben und/oder zyklische Daten empfangen und/oder gesendet werden.

7. Verfahren nach einem der vorhergehenden Ansprüche, **dadurch gekennzeichnet, dass** eine Steuerungskomponente, insbesondere eine Hardwarekomponente, einem Kommando Bereitschaft signalisiert.

8. Verfahren nach einem der vorhergehenden Ansprüche, **dadurch gekennzeichnet, dass** eine Reihefolge, in der Kommandos einen aktiven Zustand durchlaufen, und/oder in der Kommandos auf dieselbe Ressource zugreifen, vorgegeben ist.

9. Steuervorrichtung zum Steuern wenigstens eines Manipulators, insbesondere Roboters, mit wenigstens einer Zustandsmaschine (ZM), **dadurch gekennzeichnet, dass** die Vorrichtung zur Durchführung eines Verfahrens nach einem der vorhergehenden Ansprüche eingerichtet ist.

10. Computerprogramm, das ein Verfahren nach einem der Ansprüche 1 bis 8 ausführt, wenn es in einer Steuervorrichtung nach Anspruch 9 abläuft.

11. Computerprogrammprodukt mit Programmcode, der auf einem maschinenlesbaren Träger gespeichert ist und ein Computerprogramm nach Anspruch 10 umfasst.

## Claims

1. A method of controlling at least one manipulator, in particular a robot,
wherein a plurality of commands (P, B. F) are processed,
**characterized in that**
a control is implemented as a state machine and
actions of the manipulator which are controlled by the control are determined by states of the state machine, transitions between said states and actions in said states,
wherein the respective command runs through an active state (-A) within the state machine (ZM) and
takes over control of control components when it changes into said active state, wherein
the respective command in the state machine runs through a leading state (-E) which occurs before its active state and/or through a trailing state (-P) which occurs after its active state, wherein
in the leading state
control components required for carrying out the command receive data from sensors via respective interfaces and
no commands are issued to actuators by the command;
the command changes over to a completed state which occurs after its trailing state when all control components which are controlled by said command in the active or trailing state are taken over by other commands; and
a plurality of commands are processed concurrently and synchronized by transitions between the active states.

2. A method according to claim 1, **characterized in that** at least one command within a state machine runs through a pre-leading state (-V) which occurs before its leading state and/or runs through a completed state (-D) which occurs after its trailing state.

3. A method according to one of the preceding claims, **characterized in that** in a state machine at least one additional command-specific state, in particular a safety state (-STOP), a failure state (-F), and/or a waiting state (-W), is provided for a command.

4. A method according to one of the preceding claims, **characterized in that** a command communicates with at least one control component, in particular a sensor functionality and/or actor functionality, in a state (E, A, P).

5. A method according to one of the preceding claims, **characterized in that** a command specific and/or state specific control functionality is assigned to a command.

6. A method according to one of the preceding claims, **characterized in that** in a state parameters are evaluated, resources are provided, interfaces are set, and/or cyclic data are received and/or sent.

7. A method according to one of the preceding claims, **characterized in that** a control component, in particular a hardware component, signals readiness to a command.

8. A method according to one of the preceding claims, **characterized in that** an order is predetermined in which commands run through an active state and/or in which commands access the same resource.

9. Control apparatus for controlling at least one manipulator, in particular a robot, with at least one state machine (ZM), **characterized in that** the apparatus is adapted to perform a method according to one of the preceding claims.

10. Computer program, which carries out a method according to one of the claims 1 to 8 when running in a control apparatus according to claim 9.

11. Computer program product with program code which is stored on a machine readable carrier and which comprises a computer program according to claim 10.

## Revendications

1. Procédé permettant de commander au moins un manipulateur, en particulier un robot, selon lequel plusieurs demandes (P, B, F) sont traitées, **caractérisé en ce que**
une demande est implémentée comme une machine d'état et des actions commandées par la demande du manipulateur sont déterminées par des états de la machine d'état, par des transitions entre ces états et par des actions dans ces états, la demande respective passant, dans la machine d'état (ZM), un état actif et prenant la contrôle des composants de demande, dès qu'elle passe dans l'état actif,
la demande respective passant dans la machine d'état par un état préliminaire (-E) procédant son état actif et un état postérieur (-P) succédant à son état actif, des données de capteurs étant reçues dans l'état préliminaire des composants de contrôle nécessaire pour l'exécution des demandes par des interfaces correspondantes et aucune commande est sorti par la demande à des acteurs;
la demande changeant dans un état fini succédant à l'état postérieur (-P) dès que tous les composants de demande contrôlés par la demande dans l'état actif ou postérieur sont acceptés par les autres demandes; et, en même temps, plusieurs demandes (P, B, F) sont traitées et synchronisées par des transitions entre les états actifs.

2. Procédé selon la revendication 1 ou 2, **caractérisé en ce qu'**au moins une demande passe dans une machine d'état par un état de traitement préliminaire (-V) précédant son état préliminaire et/ou un état exécuté (-D) succédant à son état postérieur.

3. Procédé selon l'une quelconque des revendications précédentes, **caractérisé en ce qu'**au moins un autre état spécifique à la demande, en particulier un état de sécurité (-STOP), un état d'erreur (-F) et/ou un état d'attente (W) est prévu dans une machine d'état pour une demande.

4. Procédé selon l'une quelconque des revendications précédentes, **caractérisé en ce qu'**une demande dans un état (E, A, P) communique avec au moins une composante de commande, en particulier une fonctionnalité de capteur et/ou d'actionneur.

5. Procédé selon l'une quelconque des revendications précédentes, **caractérisé en ce qu'**une fonctionnalité de commande spécifique à une demande et/ou à un état est associée à une demande.

6. Procédé selon l'une quelconque des revendications précédentes, **caractérisé en ce que** dans un état, des paramètres sont analysés, des ressources sont fournies, des interfaces sont prédéfinies et/ou des données cycliques sont reçues et/ou envoyées.

7. Procédé selon l'une quelconque des revendications précédentes, **caractérisé en ce qu'**une composante de commande, en particulier une composante de matériel, signalise une attente à une demande.

8. Procédé selon l'une quelconque des revendications précédentes, **caractérisé en ce qu'**un ordre chronologique au cours duquel des demandes passent par un état actif et/ou au cours duquel des demandes accèdent à cette même ressource est prédéfini.

9. Dispositif de commande permettant de commander au moins un manipulateur, en particulier un robot, comprenant au moins une machine d'état (ZM), **caractérisé en ce que** le dispositif est conçu pour mettre en oeuvre un procédé selon l'une quelconque des revendications précédentes.

10. Programme informatique exécutant un procédé selon l'une quelconque des revendications 1 à 8 lorsqu'il se déroule dans un dispositif de commande selon la revendication 9.

11. Produit-programme informatique comprenant un code de programme mémorisé sur un support lisible par ordinateur et comprenant un programme informatique selon la revendication 10.
